# EUROPEAN PATENT SPECIFICATION

(11) **EP 0 980 106 B1**
(45) Date of publication and mention of the grant of the patent: **09.05.2012**
(21) Application number: 99107419.6
(22) Date of filing: 26.04.1999
(51) Int. Cl.: H01M 8/04, H01M 8/10

(54) **Solid polymer electrolyte fuel cell system with supply of liquid water to the cathode**
Polymerelektrolyt-Brennstoffzellensystem mit Zufuhr von flüssigem Wasser zur Kathode
Empilement de piles à combustibles à électrolyte solide polymèrique avec alimentation de l'eau liquide à la cathode

(30) Priority: 10.08.1998 JP 22610098
(43) Date of publication of application: 16.02.2000
(73) Proprietor: Kabushiki Kaisha Equos Research, Tokyo 101 (JP)
(72) Inventor: Ueno, Masataka, Sapporo, Hokkaido (JP); Kato, Kenji, Sapporo-city, Hokkaido (JP); Horiguchi, Munehisa, Sapporo, Hokkaido (JP); Takada, Noriyuki, Sapporo, Hokkaido (JP)
(74) Representative: Vossius & Partner

(56) References cited:
- EP-A- 0 629 014
- EP-A- 0 980 107
- WO-A-97/48143
- DE-A1- 19 636 908
- DE-A1- 19 641 143
- PATENT ABSTRACTS OF JAPAN vol. 1998, no. 14, 31 December 1998 (1998-12-31) & JP 10 255828 A (HONDA MOTOR CO LTD), 25 September 1998 (1998-09-25)
- PATENT ABSTRACTS OF JAPAN vol. 1998, no. 02, 30 January 1998 (1998-01-30) & JP 09 266004 A (AQUEOUS RES:KK; AISIN AW CO LTD), 7 October 1997 (1997-10-07)
- PATENT ABSTRACTS OF JAPAN vol. 1996, no. 02, 29 February 1996 (1996-02-29) & JP 07 263010 A (MAZDA MOTOR CORP), 13 October 1995 (1995-10-13)
- PATENT ABSTRACTS OF JAPAN vol. 1995, no. 03, 28 April 1995 (1995-04-28) & JP 06 333586 A (SANYO ELECTRIC CO LTD), 2 December 1994 (1994-12-02)

## Description

The present invention relates to a fuel cell system and more particularly to a fuel cell system using a proton exchange membrane as an electrolyte.

A proton exchange membrane fuel cell comprises a proton exchange membrane (PEM) between two electrodes, that is a cathode to which an oxidizing gas is supplied and an anode to which fuel gas is supplied. PEM acts as an electrolyte and transports therethrough hydrogen ions obtained at the anode of the fuel cell toward the cathode, in the form of proton (H⁺). Each of the electrodes comprises a catalyst layer deposited on a porous base member through which the reactant gas is supplied. Mounted externally of each electrode is a separator or connector plate with grooves permitting the reactant gas to be introduced into the electrode at a constant flow rate. An excessive gas which has not been consumed by the fuel cell reaction is exhausted to the open air through the grooved separator. The electricity generated by the energy conversion reaction at the anode is collected at the electrode porous base member and transported to the outside of the fuel cell system through the separator. In actual application, the system includes a plurality of fuel cells which are stacked in series with the separator being interposed between adjacent fuel cells.

Since the fuel cell generates heat in correspondence to the electric power generated, a fuel cell stack usually includes cooling plates between fuel cells at predetermined intervals. Each cooling plate has a passage of a cooling medium such as air and water to prevent excessive overheat of fuel cells 101 in operation.

Proton is hydrated when being transferred through PEM electrolyte, so that PEM tends to be dehydrated as the fuel cell reaction proceeds. PEM must always be properly humidified to prevent decrease of ion-conductivity and energy conversion efficiency. In the conventional designs, hydrogen gas is humidified by suitable means which, in turn, humidify PEM when it is supplied to the anode.

Various attempts have also been proposed to humidify an air to be supplied to the cathode. Since the cathode of the fuel cell in operation has been heated to 80 °C, for example, the air of a normal temperature should be preheated by a humidifier so that its saturated vapor becomes consistent with the ambient vapor condition of the cathode. Such humidifier that is required to have water supplying function and air preheating function can not be simple in construction.

In Japanese patent un-examined publication No. 7-14599, there is provided a water injection nozzle to inject a necessary quantity of water into an air introducing pipe through which an air is supplied to the cathode of the PEM fuel cell. Since the nozzle is located upstream of a compressor, a liquid water injected from the nozzle is evaporated when subjected to heat generated by the compressor. Thus, the cathode is humidified by vapor, not by liquid water.

In the fuel cell system of Japanese patent un-examined publication No. 9-266004, a discharge gas from the anode containing hydrogen gas which has not been consumed during the anodic reaction is introduced into the cathode where the unconsumed hydrogen gas in the discharge gas is combusted with oxygen to generate water, which well humidifies PEM electrolyte. In this system, there is no need to install a humidifier for humidifying an air to be supplied to the cathode.

During operation of the fuel cell system, electron produced at the anode is moved to the cathode where it reacts with oxygen in the air or any other oxidizing gas supplied thereto to produce water. Accordingly, in accordance with the conventional recognition in the art, there is a greater need to humidify hydrogen gas to be supplied to the anode, than at the cathode where water can at least partially be self-sustaining.

In EP-A-629 014, a method and device for humidifying a process gas for operating fuel cell systems is disclosed, wherein a mediate quantity of fine water droplets is injected into the gas supply line, by way of which the process air is humidified. A process air is automatically cooled as result of a partial evaporation of the water droplets while the residual quantity of water of droplets is introduced into the fuel cell.

DE-A-196 41 143 teaches a method for cooling and humidifying a polymer electrolytic fuel cell by supplying liquid water directly into the gas channels.

JP-A-7-263010 discloses a supply gas humidifier for a fuel cell system, the humidifier being composed of an ultrasonic wave generator, and injector, and a heater arranged in a hydrogen's supply pipe connected to a solid high polymer electrolytic fuel cell.

As a result of the inventors' repeated tests and investigation, however, it has been found that water produced at the cathode permeates through PEM electrolyte toward the anode, which makes it unnecessary to humidify hydrogen gas to be supplied to the anode. On the other hand, a water quantity of PEM electrolyte at the cathode side tends to decrease by contacting the air flow to the cathode. Such finding is contradictory to the conventional knowledge and has been first recognized by the present inventors.

It is an object of the present invention to provide a fuel cell system, based on the above-described finding, which is capable of maintaining a proton exchange membrane to be in a suitable moisture condition.

Another object of the present invention is to provide a fuel cell system which is simple in construction, small in size, easy to install and, therefore, particularly suitable to be mounted on a vehicle.

Still another object of the present invention is to smoothly and effectively humidify an electrolyte membrane in a fuel system during the start-up operation of the system.

According to an aspect of the present invention there is provided a fuel cell system and method as defined in the claims in which water is supplied to the surface of the cathode not in a vapor state but in a liquid state.

Liquid water supplied onto the surface of the cathode may preferentially take latent heat from the air around the cathode to prevent water evaporation from the electrolyte membrane which, therefore, remains to be in a suitable and even moisture condition. This contributes to improvement of capacity and durability of the fuel cell system. Supply of the liquid water is also effective to cool the cathode which would otherwise be overheated to an excessive temperature, which means that the temperature of the fuel cell of the present invention may be controlled without need to use cooling plates.

In accordance with the above aspect of the present invention, the liquid water supplying means may supply the liquid water continuously during start-up operation of the system. In modified application, the liquid water supplying means supplies the liquid water for a predetermined period during start-up operation of the system. Accordingly, the electrolyte membrane, which could have become too dried to provide its original performance after a long time interval from the last operation of the fuel cell system, could readily be humidified. The liquid water supplied by the liquid water supplying means is well dispersed onto the surface of the cathode by the flow of the second gas such as air which has already been supplied by the second gas supplying means.

The foregoing and other objects and features of the present invention can be apparent from the following description when read in conjunction with the accompanying drawings in which:
Fig. 1 is a schematic view diagrammatically showing the structure of a fuel cell power generating apparatus embodying the present invention;
Fig.2 is a schematic view showing the single fuel cell structure in the apparatus shown in Fig.1;
Fig.3 is a schematic view showing the fuel cell stack including a plurality of single fuel cell each having the structure of Fig.2;
Fig.4 is a block diagram showing a control system of the apparatus of Fig. 1;
Fig.5 is a flowchart showing the start-up control operation of the apparatus of Fig.1;
Fig.6 is a flowchart showing the normal control operation of the apparatus of Fig. 1; and
Fig.7 is a flowchart showing the stop control operation of the apparatus of Fig.1.

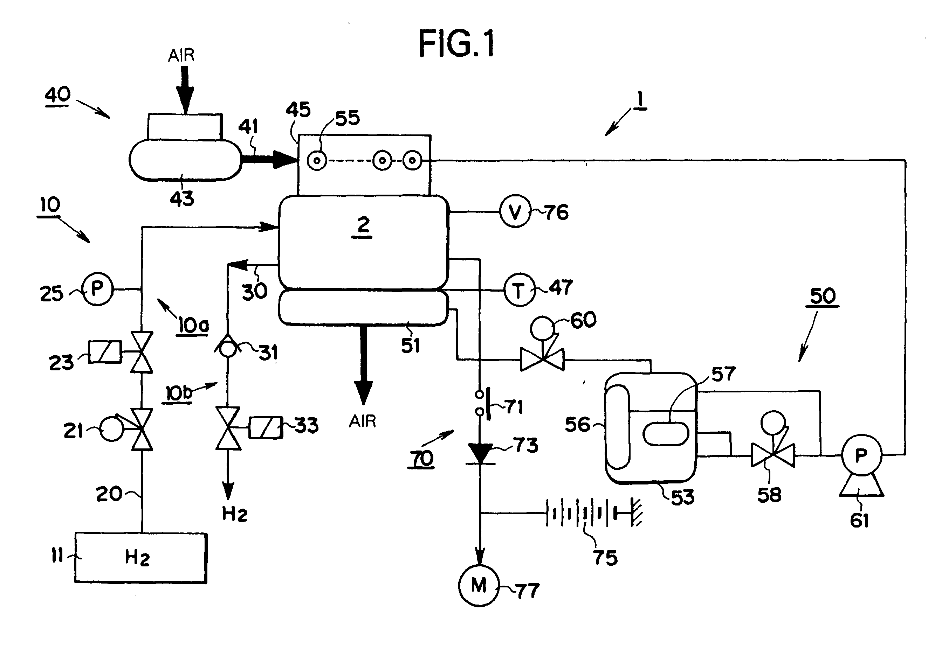

Fig.1 diagrammatically shows the structure of a fuel cell power generating apparatus 1 according to an embodiment of the present invention, which comprises in general a proton exchange electrolyte fuel cell stack 2, a fuel gas supply system 10, an air supply system 40 and an output system 70.

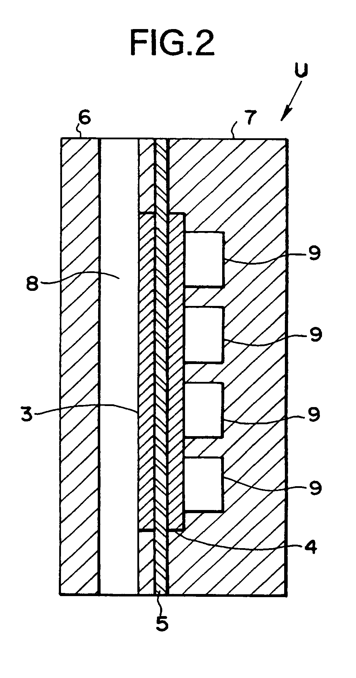

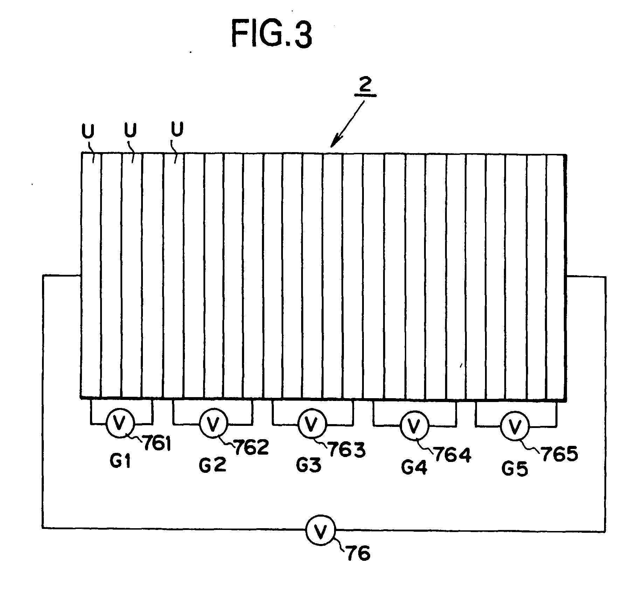

Fuel cell stack 2 comprises a plurality of single fuel cell units U connected in series. Shown in Fig.2 is a structure of single fuel cell unit U which, as known in the art, comprises an air electrode or cathode 3, a fuel electrode or anode 4, an electrolyte membrane 5 interposed therebetween. Separators 6, 7 are provided at both sides of cathode 3 and anode 4 respectively which compare adjacent fuel cell units. Although single fuel cell units U may have various and different structures, in the example of Fig.2, separator 6 has a plurality of longitudinally extending air flow passages 8 that allow air to flow therethrough in contact with cathode 3, whereas separator 7 has a plurality of transversely extending hydrogen gas flow passages 9 that allow hydrogen gas to flow therethrough in contact with anode 4. In stack 2 of this example, several fuel cell units U are coupled in series as shown in Fig.3 to constitute fuel cell group G1-G5, the output volume of which is detected by voltmeter 761-765. The overall output voltage from stack 2 is detected by a voltmeter 76.

Fuel gas supply system 10 comprises a fuel gas induction system 10a and a fuel gas discharge system 10b. Fuel gas induction system 10a includes a hydrogen adsorptive alloy 11 and a hydrogen gas induction passage 20 through which hydrogen gas radiated from hydrogen adsorptive alloy 11 is supplied to hydrogen gas flow passages 9 at anodes 4 of respective fuel cell units U in stack 2. Passage 20 has a pressure control valve 21 that is controlled to regulate and reduce the pressure of hydrogen gas from hydrogen adsorptive alloy 11, an electromagnetic valve 23 that is controlled to open and close passage 20, and a pressure sensor of well-known construction that detects the pressure of hydrogen gas to be now supplied to anodes 4 in stack 2.

Hydrogen gas discharge system 10b includes a hydrogen gas discharge passage 30 with a check valve 31 and an electromagnetic valve 33. Check valve 31 permits one-way gas flow in passage 30 and prevent entry of an atmospheric air to anodes 4 in stack 2. Hydrogen gas which has not been consumed and remains at anodes 4 in stack 2 is discharged through passage 30 to the open air. Electromagnetic valve 33 is intermittently driven to discharge water which is produced by reaction or combustion between hydrogen gas discharged through passage 30 from anodes 4 and air to be introduced from the atmosphere, which occurs in a catalytic combustor also mounted in passage 30, though not shown in Fig.1.

Air supply system 40 introduces the atmospheric air to air flow passage 8 at cathodes 3 of respective fuel cell units U in stack 2, and then discharge air from stack 2 to the open air through condenser 51 where water is separated from the discharged air. System 40 includes an air supply passage 41, with a fan 43, through which the atmospheric air is supplied to an air intake manifold mounted above stack 2, which then flows through air flow passage 8. In this embodiment, one or more of nozzles 55 are mounted on one or both of side walls of air intake manifold 45 for spraying liquid water to the air flowing through manifold 45. Most of the sprayed water reaches condenser 51 still in the liquid state, but a portion thereof evaporates during flowing through stack 2. which is condensed by condenser 51 to collect liquid water. The discharge air from cathode 3 may include vapor generated by fuel cell reaction in stack 2, which is also treated by condenser 51 to collect liquid water. In this embodiment, condenser 51 has a known heat exchanger and a cooling fan (both not shown) but of course may be of any design. The temperature of discharge gas from stack 2, which should be equivalent to the stack temperature, is monitored by a temperature sensor 47.

Water supply system 50 is a closed system in which water in a tank 53 is supplied to air intake manifold 45 through nozzles 55 and return water from condenser 51 to tank 53. A water level in tank 53 is constantly monitored by a water level sensor 56 of a floating type, for example. To prevent freezing of water in tank 53, there is mounted a heater 57 and an electromagnetic valve 58. Another electromagnetic valve 60 is mounted to a conduit connected between condenser 51 and tank 53 to prevent evaporation of water in tank 53.

Water in tank 53 is pumped up by a pump 61 and supplied to nozzles 55 which continuously or intermittently sprayed water onto the surface of cathodes 3 in stack 2. The sprayed water will preferentially take latent heat from cathode 3 and, therefore, prevent water evaporation or dehydration of electrolyte membrane 5 which remains in proper moisture condition. The sprayed water will also cool cathode 3 to automatically control the temperature of stack 2. No additional cooling medium is required.

Output system 70 receives the output from stack 2 to drive a motor 77. Output system 70 includes a switch relay 71, a battery 75 and a rectifying diode 73 between relay 71 and battery 75. Battery 75 is provided as an auxiliary power source which supplies a power to motor 77 when stack 2 becomes inoperative during driving of a vehicle. When motor 77 is driven only by battery 75, it is known to the driver through any visual or audible information means such as a display (not shown). In a preferable embodiment, the display also indicates the remaining battery time.

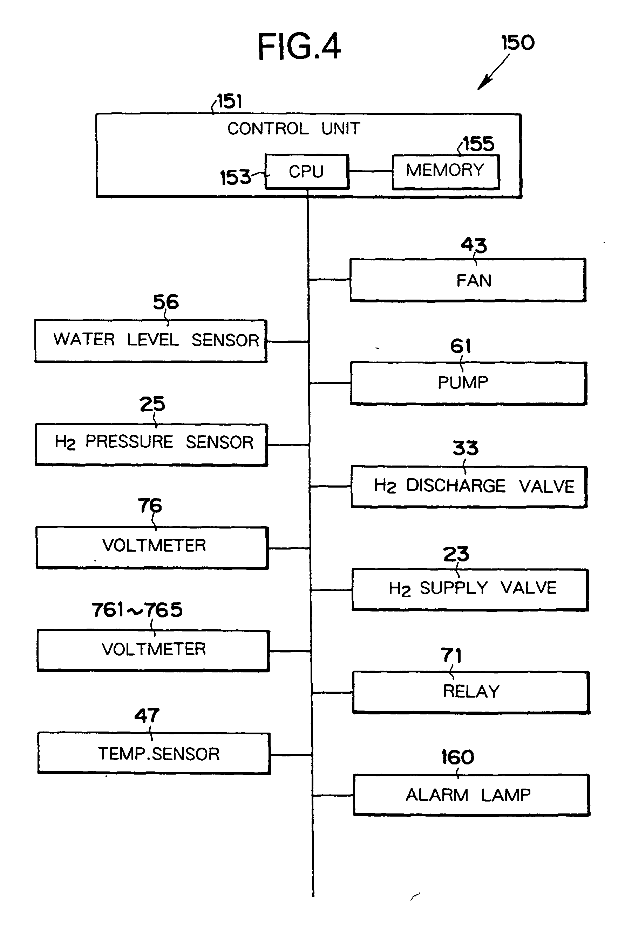

Fig.4 shows a control system 150 of apparatus 1 in which the respective constituents are assigned the same number as shown in Fig. 1. A control unit 151 has a CPU 153 and a memory 155. CPU 155 is connected to the respective constituents through interfaces (not shown) and control operation thereof in accordance with control programs in memory 155 to execute the following control operation.

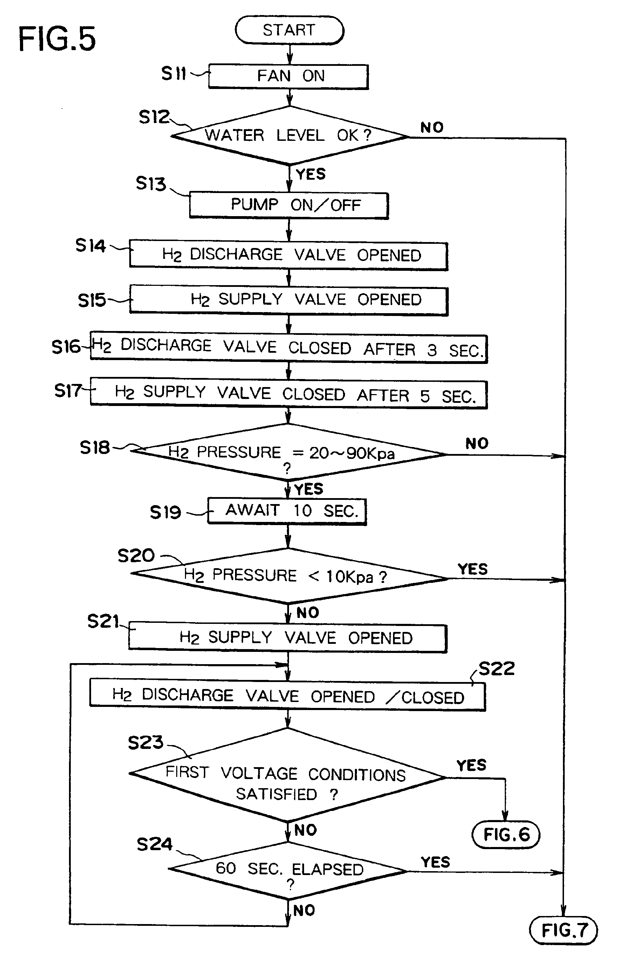

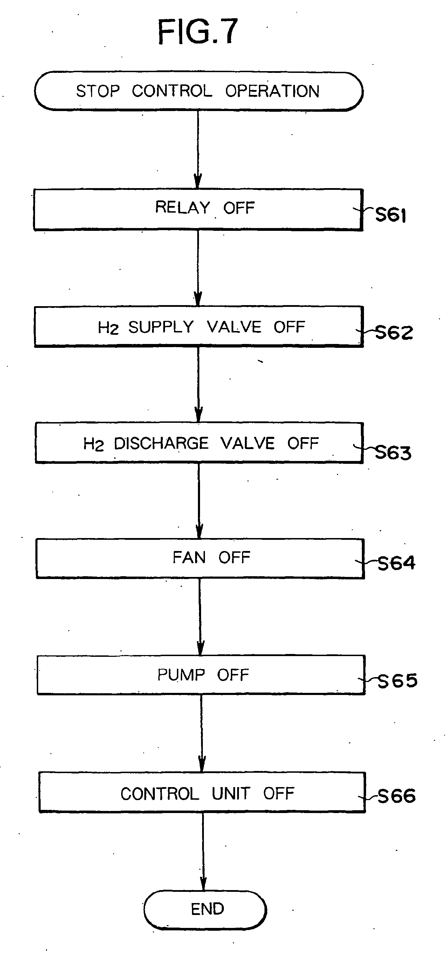

Referring now specifically to the flowchart of Fig. 5 showing the start-up control operation of apparatus 1, when apparatus 1 is to be started up, at first, fan 43 is driven to begin supplying air to air intake manifold 45, at S11. Next, at S12, it is discriminated if the current water level in tank 53 monitored by sensor 56 is higher than a predetermined level, which may be 10% of the maximum capacity in tank 53. When the current water level is below the predetermined level, the start-up control operation is terminated and the stop control operation begins with the flowchart of Fig.7 to be described later. Alarm lamp 160 is lightened to urge water supplement into tank 53.

When tank 53 has a sufficient water quantity, the procedure is advanced to S13 where pump 61 is driven over 10 seconds to allow nozzles 55 to inject water into air intake manifold 45. As described before, the sprayed water keeps a proper moisture condition of electrolyte membrane 5. Accordingly, it is possible to prevent damage from electrolyte membrane 5 which might have occurred by reaction or combustion when hydrogen gas is supplied to anode 4.

When apparatus 1 has been at standstill for a long period of time, some quantity of air in cathode 3 could permeate to anode 4 through electrolyte membrane and then flow into passage 9, which should be replaced with hydrogen gas. Such safeguard operation is carried out through S14-S17 so that hydrogen gas flow passages 9 in the respective anodes 4 of stack 2 are all filled with hydrogen gas. More particularly, hydrogen gas discharge valve 33 is opened at S14 and, immediately thereafter, electromagnetic valve 23 is opened at S15. Since valve 33 has already been opened when hydrogen gas is supplied through valve 23, a momentary gas pressure in hydrogen gas supply system 10 may be discharged to the open air to prevent damage from electrolyte membrane 5. Valve 33 keeps opened for 3 seconds, during which valve 23 is opened, and then closed at S16. Valve 23 keeps opened for 5 seconds and then closed at S17. Through S14-S17, any air may be purged from not only passages 9 in stack 2 but also hydrogen gas induction system 10a.

Immediately after opening valve at S17, the pressure of hydrogen gas in induction system 10a is detected by sensor 25 at S18. When the pressure detected is not within a predetermined range, for example 20-90Kpa (No at S 18), the start-up control operation is terminated and the stop control operation begins with the flowchart of Fig.7 to be described later, and alarm lamp 160 is lightened to urge inspection and repair of hydrogen gas induction system 10a.

In normal control operation, hydrogen gas to be supplied to stack 2 is regulated to have a pressure of 50-60Kpa by pressure control valve 21. When the pressure detected at S18 is below 20Kpa, there is a probability of leakage of hydrogen gas due to insufficient sealing at some location in hydrogen gas induction system 10a. When the pressure detected at S 18 exceeds 90Kpa, there is a probability of malfunction of pressure control valve 21. Electrolyte membrane 5 may suffer serious damage if hydrogen gas of a pressure exceeding 90Kpa should be supplied to stack 2.

Comparison of the detected gas pressure with the reference pressure range at S18 is carried out at a predetermined interval (for example, 100ms) in response to a clock frequency of control unit 151. In practice, "NO" result is discriminated at S18 when three consecutive comparison results in the same detection of extraordinary low or high hydrogen gas pressure, to exclude any noise in the electric signal from sensor 25. Although not specifically described, the following steps of discrimination may include some countermeasure to the influence of noise.

It awaits 10 seconds after opening valve 23 at S 19 and compares the detected pressure with 10Kpa at S20. Since hydrogen gas supplied to anode 4 is consumed by reaction with oxygen in the air supplied to cathode 3, a partial pressure of hydrogen in hydrogen gas induction system 10a tends to be decreased with time. However, if the pressure is rapidly decreased to below 10Kpa in 10 seconds, there is a probability of gas leakage due to deterioration of electrolyte membrane 5. If it is discriminated at S20, apparatus 1 is compulsorily stopped in accordance with the flowchart of Fig.7 to be described later, and alarm lamp 160 is lightened. Gas leakage from other location has been detected at S 18, if any.

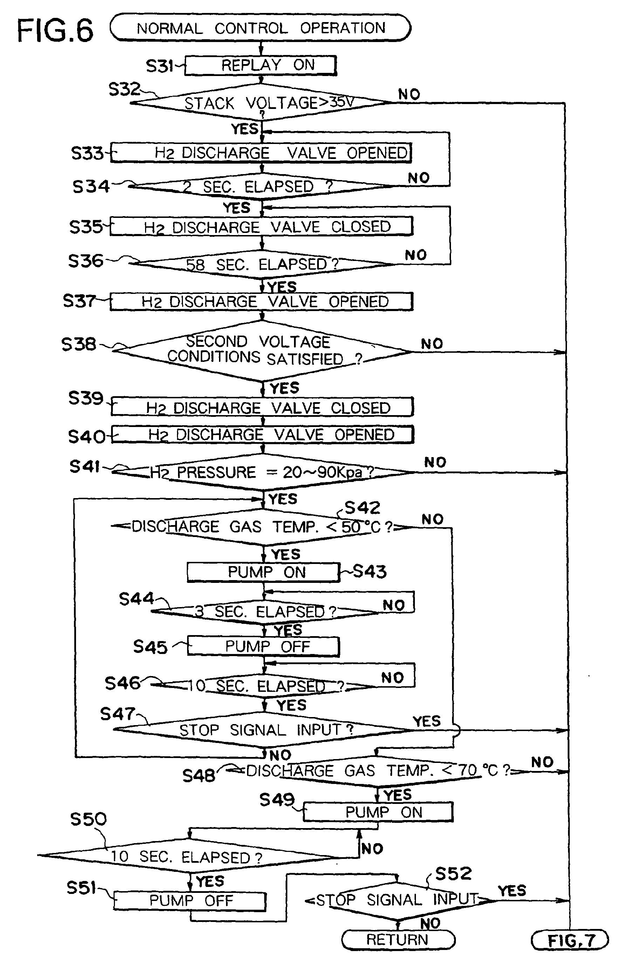

When no gas leakage through membrane 5 is detected (NO at S20), the procedure is advanced to S21 where induction valve 23 is again opened. While keeping induction valve 23 in its open state, discharge valve 33 is controlled such that it is opened for 1 second, followed by closing for 2 seconds, which is repeated over 60 seconds, at S22. During such operation, it is discriminated if the output voltage from stack 2 satisfies first predetermined output conditions, at S23. When the first predetermined output conditions have been satisfied, the procedure is advanced to the normal operation in accordance with the flowchart of Fig.6. If not, apparatus 1 is made out of operation in accordance with the flowchart of Fig.7 to be described later, and alarm lamp 160 is lightened.

The first predetermined output conditions may comprise, for example, as follows:
(1) output voltage from Stack 2 > first predetermined voltage; and
(2) each output voltage from fuel cell group G1-G5 > second predetermined voltage. When both of conditions (1) and (2) are fulfilled, discrimination at S23 produces "YES" result which allows apparatus 1 to run in accordance with the normal operation flowchart of Fig.6. When either or both of conditions (1) and (2) is not fulfilled, it produces "NO" result to stop apparatus 1 in accordance with the stop control operation flowchart of Fig.7.

The normal operation is carried out in accordance with the flowchart of Fig.6 which start with S31 where relay 71 is turned on to connect the output voltage from stack 2 to motor 77. The output voltage at this time is detected by voltmeter 76 and compared with a reference voltage of 35V, for example, at S32. When the detected output voltage is below 35V (NO at S32), which means that a sufficient power to drive motor 77 has not yet been obtained, apparatus 1 is stopped in accordance with the stop operation flowchart of Fig.7, and alarm lamp 160 is lightened. When the detected output voltage is greater than 35V (YES at S32), hydrogen gas discharge valve 33 is opened for 2 seconds, and then closed for 58 seconds, at S33-S37, then followed by discrimination at S38. Unless discrimination at S38 produces "YES" result, operation through S33-S37 is repeated so that fuel gas discharge system 10b is opened for 2 seconds in every 1 minute.

At S38, the output voltage from stack 2 detected when discharge valve 33 is opened at S36 is compared with second predetermined output conditions which, in this embodiment, is represented by the following inequality:
each output voltage from fuel cell group G1-G5 > third predetermined voltage
When all of the output voltage from groups G1-G5 exceeds the third predetermined voltage, it is discriminated that the output voltage satisfies the second predetermined output conditions (YES at S38) to continue the normal operation of the flowchart of Fig.6. If at least one of the output voltage from groups G1-G5 do not reach the third predetermined voltage, the result of discrimination at S38 is NO to stop operation of apparatus 1.

Operation through S39-S41 discriminates if a sufficient quantity of hydrogen gas has been supplied to hydrogen gas induction system 10a, which is substantially the same as operation through S16-S18 of the flowchart of Fig.5.

At S42, it is discriminated if the discharge gas temperature is below 50 °C. When the discharge gas temperature which should be substantially equal to the stack temperature remains below 50°C, operation through S43-S46 is repeated until there is an input of a stop signal at S47. Through S43-S46, pump 61 is turned on and off to intermittently inject water from nozzles 55 onto the surface of cathode 3 for 3 seconds at every 10 second interval. When the detected discharge gas temperature exceeds 50 °C (NO at S42), the procedure is advanced to S48 where the detected discharge gas temperature is compared with another higher reference temperature of 70 °C , in this embodiment. When the discharge gas temperature exceeds 70 °C (NO at S48) which suggests some extraordinary reaction or malfunction in apparatus 1, apparatus 1 is caused to stop and alarm lamp 160 is lightened. When the discharge gas temperature is higher than 50°C but lower than 70 °C (YES at S48), pump 61 is driven continuously over 10 seconds, through S49-S51, to cool stack 2 more actively than in the intermittent water supply mode carried out by operation through S43-S46. When the operator turns off the ignition key to generate the stop command signal at S47 or S52, control unit 151 stops apparatus 1.

Referring specifically to the flowchart of Fig. 7, the stop control operation begins with S61 where relay 61 is turned off to disconnect stack 2 from motor 77. Then, hydrogen gas supply valve 23 is closed at S62 and hydrogen gas discharge valve 33 is closed at S63. This order of operation will minimize the quantity of hydrogen gas still remaining in apparatus 1 after it is stopped, which would be used in the post reaction. Fan 64 is turned off at S64 after supply of hydrogen gas is interrupted, which facilitates to cool electrolyte membrane 5. Then, pump 61 is turned off to interrupt water supply to stack 2 at S65. Finally, a power switch to control unit 151 is turned off at S66.

Although the present invention has been described in conjunction with specific embodiments thereof, it is to be understood that it is capable of considerable variation and modification without departure from the scope of the appended claims. For example, the water spray nozzle is preferably mounted to the air intake manifold at the cathode but may be provided at any location and at any distance from the cathode, as far as it may supply liquid water to the cathode. When the fuel cell system is installed at factory or home, it may be coupled to waterworks so that city water is supplied to the cathode.

## Claims

1. A fuel cell system comprises one or more of fuel cells each having an anode, a cathode and an electrolyte membrane interposed between said anode and said cathode; first gas supplying means for supplying a first gas including fuel gas to said anode; second gas supplying means for supplying a second gas including oxygen to said cathode; liquid water supplying means for supplying liquid water to the surface of said cathode; and control means for controlling operation of said first gas supplying means, said second gas supplying means and said liquid water supplying means such that, when said system is to start up, said cathode is first subjected to supply of said second gas, followed by supply of said liquid water, and then followed by supply of said first gas to the anode.

2. The system according to claim 1 wherein said liquid water supplying means is adapted to supply said liquid water continuously during start-up operation of said system.

3. The system according to claim 1 wherein said liquid water supplying means is adapted to supply said liquid water for a predetermined period during start-up operation of said system.

4. A method for starting up a fuel cell system comprising one or more of fuel cells each having an anode, a cathode and an electrolyte membrane interposed between said anode and said cathode, the method comprising the steps of
supplying a second gas including oxygen to said cathode,
then supplying liquid water to the surface of the cathode, and
then supplying a first gas including fuel gas to said anode.

5. The method according to claim 4, wherein said liquid water is supplied continuously during start-up operation of said system.

6. The method according to claim 4, wherein said liquid water is supplied for a predetermined period during start-up operation of said system.

## Patentansprüche

1. Brennstoffzellensystem, das aufweist: eine oder mehrere Brennstoffzellen, die jeweils eine Anode, eine Kathode und eine Elektrolytmembran, die zwischen der Anode und der Kathode angeordnet ist, aufweisen; erste Gaszuführeinrichtungen, um ein erstes Gas, das Brennstoffgas enthält, der Anode zuzuführen; zweite Gaszuführeinrichtungen, um ein zweites Gas, das Sauerstoff enthält, der Kathode zuzuführen; Zuführeinrichtungen für flüssiges Wasser, um flüssiges Wasser der Oberfläche der Kathode zuzuführen; und Steuereinrichtungen zum Steuern des Betriebs der ersten Gaszuführeinrichtungen, der zweiten Gaszuführeinrichtungen und der Zuführeinrichtungen für flüssiges Wasser, so dass, wenn das System anfährt, die Kathode zuerst der Zufuhr des zweiten Gases ausgesetzt wird, gefolgt von der Zufuhr des flüssigen Wassers und dann gefolgt von der Zufuhr des ersten Gases zur Anode.

2. System nach Anspruch 1, wobei die Zuführeinrichtungen für flüssiges Wasser eingerichtet sind, das flüssige Wasser während des Anfahrbetriebs des Systems kontinuierlich zuführen.

3. System nach Anspruch 1, wobei die Zuführeinrichtungen für flüssiges Wasser eingerichtet sind, das flüssige Wasser während des Anfahrbetriebs des Systems für eine vorherbestimmte Periode zuführen.

4. Verfahren zum Anfahren eines Brennstoffzellensystems mit einer oder mehreren Brennstoffzelle(n), die jeweils eine Anode, eine Kathode und eine Elektrolytmembran aufweisen, die zwischen der Anode und der Kathode angeordnet ist, wobei das Verfahren die Schritte aufweist:
Zuführen eines zweiten Gases, das Sauerstoff enthält, zu der Kathode,
Zuführen von flüssigem Wasser zur Oberfläche der Kathode, und
Zuführen eines ersten Gases, das Brennstoffgas enthält, zu der Anode.

5. Verfahren nach Anspruch 4, wobei das flüssige Wasser während des Anfahrbetriebs des Systems kontinuierlich zugeführt wird.

6. Verfahren nach Anspruch 4, wobei das flüssige Wasser während des Anfahrbetriebs des Systems für eine vorbestimmte Periode zugeführt wird.

## Revendications

1. Système de pile à combustible comprenant une ou plusieurs piles à combustible pourvues chacune d'une anode, d'une cathode et d'une membrane électrolytique intercalée entre l'anode et la cathode ; un premier moyen d'alimentation en gaz pour alimenter l'anode avec un premier gaz comprenant du gaz combustible ; un deuxième moyen d'alimentation en gaz pour alimenter la cathode avec un deuxième gaz comprenant de l'oxygène ; un moyen d'alimentation en eau liquide pour alimenter la surface de la cathode avec de l'eau liquide ; et un moyen de commande pour commander le fonctionnement du premier moyen d'alimentation en gaz, du deuxième moyen d'alimentation en gaz et du moyen d'alimentation en eau liquide de telle manière que, lorsque le système doit être démarré, la cathode est d'abord soumise à l'alimentation avec le deuxième gaz, puis à l'alimentation avec l'eau liquide, l'anode étant enfin soumise à l'alimentation avec le premier gaz.

2. Système selon la revendication 1, où le moyen d'alimentation en eau liquide est prévu pour alimenter en eau liquide de manière continue pendant le démarrage du système.

3. Système selon la revendication 1, où le moyen d'alimentation en eau liquide est prévu pour alimenter en eau liquide pendant une durée définie lors du démarrage du système.

4. Procédé de démarrage d'un système de pile à combustible comprenant une ou plusieurs piles à combustible pourvues chacune d'une anode, d'une cathode et d'une membrane électrolytique intercalée entre l'anode et la cathode, ledit procédé comprenant les étapes suivantes :
alimentation de la cathode avec un deuxième gaz comprenant de l'oxygène,
puis alimentation de la surface de la cathode avec de l'eau liquide, et
enfin alimentation de l'anode avec un premier gaz comprenant du gaz combustible.

5. Procédé selon la revendication 4, où l'eau liquide est alimentée de manière continue pendant le démarrage du système.

6. Procédé selon la revendication 4, où l'eau liquide est alimentée pendant une durée définie lors du démarrage du système.
